# EUROPEAN PATENT APPLICATION

(11) **EP 2 431 550 A1**
(43) Date of publication of application: **21.03.2012**
(21) Application number: 11154833.5
(22) Date of filing: 17.02.2011
(51) Int. Cl.: E04D 11/00, E04F 15/024

(54) **Support for supporting an elevated surface**

(30) Priority: 21.09.2010 BE 201000546
(71) Applicant: Solidor Rubber & Products, 8930 Lauwe (BE)
(72) Inventor: The designation of the inventor has not yet been filed
(74) Representative: BiiP cvba

(57) **Abstract**

The present invention is directed to a support comprising a base part for being positioned on an underlying surface and a carrier part for carrying an elevated surface, characterized in that the base part comprises a resilient contact layer for making contact with the underlying surface. Further, the present invention is directed to method for manufacturing such support, comprising obtaining a composition of granulated rubber and a polymer and moulding the composition to form the resilient contact layer.

## Description

### FIELD OF THE INVENTION

The present invention relates to a support comprising a base part for being positioned on an underlying surface and a carrier part for carrying an elevated surface. Further, the present invention relates to method for manufacturing such support.

### BACKGROUND OF THE INVENTION

Many kinds and designs of pedestals, such as for example described in WO9301379, are known for supporting elevated roof or garden terraces using flagstones, granite or concrete slabs or wooden timber boards or timber tiles, for supporting podia or elevated technical floors, etc.

In many cases, and in particular in case of elevated roof terraces, it is very important not to damage the underlying surface whereon the pedestals are installed. For example, in case of roof terraces the underlying surface, i.e. the roof, is covered by roofing which is sensitive to compression, potentially resulting in perforation.

In an attempt to avoid roofing damage, terrace or floor installers use separate pieces of roofing or rubber to be placed underneath the pedestals. Obviously, this way of installing is labor intensive and not beneficial with respect to efficiency, material cost, and installation cost.

An additional problem is that water may percolate between the pedestal and the separate piece of roof or rubber underneath it, which can result in unstability after being exposed to a number of frost-thaw cycles.

Another general problem rising upon installing an elevated terrace or floor is that the underlying surface is often not sufficiently planarized. For example, if the underlying surface is made of poured concrete, the concrete will often show little bumps, bursts, etc., hindering to obtain perfectly installed pedestals and a perfectly balanced elevated terrace, podium or floor.

Considering the above draw backs, it is an object of the present invention to provide a support for supporting an elevated surface allowing less labor intensive installation, resulting in improved efficiency, less material cost, and less installation cost.

Another object of the present invention is to provide a support for supporting an elevated surface keeping sufficient stability after being exposed to a number of frost-thaw cycles.

It is still another object of the present invention to provide a support for supporting an elevated surface, which provides improved stability on underlying surfaces suffering from significant roughness or irregularities, resulting in a better balanced elevated terrace, podium or floor.

The present invention meets the above objects by providing a support characterized in that its base part comprises a resilient contact layer for making contact with the underlying surface.

### SUMMARY OF THE INVENTION

The present invention is directed to a support comprising a base part for being positioned on an underlying surface and a carrier part for carrying an elevated surface,
characterized in that the base part comprises a resilient contact layer for making contact with the underlying surface.

Further, the present invention is directed to method for manufacturing such support, comprising obtaining a composition of granulated rubber and a polymer and moulding the composition to form the resilient contact layer.

### BRIEF DESCRIPTION OF THE DRAWINGS

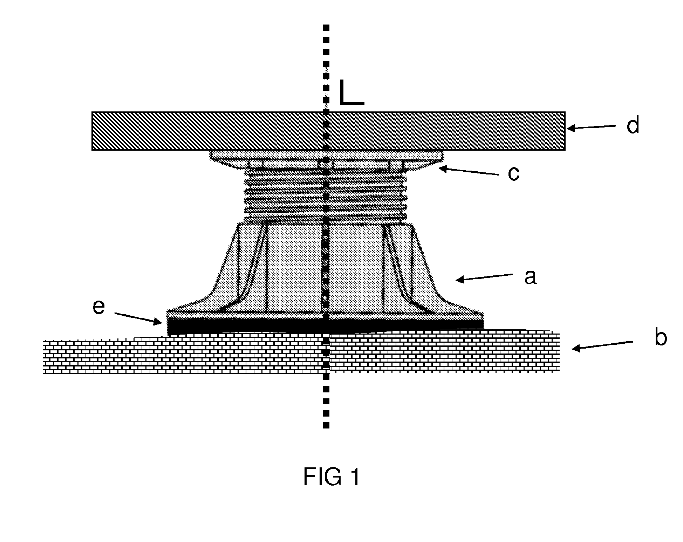

FIG 1 illustrates an embodiment of a support for supporting an elevated surface in accordance with the present invention.

### DESCRIPTION OF THE INVENTION

In the context of the present invention, the elevated surface is understood as an elevated roof terrace, elevated garden terrace, elevated hotel room or apartment terrace, a podium, an elevated technical floor, and the like.

In the context of the present invention, the underlying surface is understood as the soil, floor, roof, or any other construction on which the elevated surface has to be installed.

According to a first embodiment of the present invention and as illustrated in FIG 1, a support is provided comprising a base part (a) for being positioned on an underlying surface (b) and a carrier part (c) for carrying an elevated surface (d), characterized in that the base part comprises a resilient contact layer (e) for making contact with the underlying surface.

By using a resilient contact layer, installers don't need to provide separate roofing or rubber pieces in order not to damage the underlying surface, in particular when the support is exposed to high vertical load. Not being obliged to place separate pieces of rubber or roofing obviously may result in labor intensive installation, in improved efficiency, less material cost, and less installation cost.

Another advantage is that, because the resilient contact layer is an integral part of the base part of the support, water cannot intrude in between. Even after being exposed to a number of frost-thaw cycles, sufficient stability may be assured.

Still another important advantage of the present invention is that, since the resilient contact layer makes direct contact with the underlying surface and since its resilience makes that its thickness is locally adjusted upon applying pressure on it, improved stability may be obtained on underlying surfaces having small or even significant roughness or irregularities such as bumps, resulting in improved stability and a better balanced elevated terrace, podium or floor.

An additional advantage of having a resilient contact layer in contact with the underlying surface is that impact on the elevated surface is absorbed, not by the support itself or by the underlying surface, but by the resilient layer.

Further, due the resilient contact layer, a support in accordance with the present invention may have improved noise absorbance and may show improved anti-slipping characteristics, i.e. the support may stick more tightly to the underlying surface.

In an embodiment in accordance with the present invention, the resilience of the resilient contact layer may be sufficient to compensate for small or significant surface roughness or irregularities such as bumps having a size of at least [to be completed by inventor] upon applying vertical pressure on the support.

The resilient contact layer may have a compression under traffic load of between 5 and 25%, between 5 and 15% preferably about 10% at 40t/m², and between 10 and 35%, between 15 and 25% preferably about 20% at 90 t/m², as measured based on DIN EN ISO3386-2.

In accordance with the present invention, the resilient contact layer may have sufficient thickness to compensate for small or significant surface roughness or irregularities such as bumps upon applying vertical pressure on the support. It may have a thickness of at least 2 mm, preferably from 2 to 25 mm, from 4 to 20 mm, and most preferably from 6 to 15 mm.

In an embodiment in accordance with the present invention, the resilient contact layer may be made of any resilient material suitable for forming a resilient layer. Preferably, the resilient layer may comprise rubber, synthetic or natural, and most preferably recycled rubber.

In a particular embodiment in accordance with the present invention, the resilient contact layer may be made of a compression moulded composition of granulated rubber and a polymer. Granulated rubber may be obtained by grinding rubber tires, rubber sealings, rubber floor tiles, etc. The polymer may be any polymer suitable for being mixed with granulated rubber and being compression moulded, preferably polyurethane.

The resilient contact layer may have a dynamic friction coefficient of at least 0.60, preferably 0.65, most preferably 0.68, in order to achieve a support with high anti-slip characteristics.

The base part and the carrier part may be made of any plastic suitable for extrusion of injection moulding, such as polypropylene, low or high density polyethylene, polyvinylchloride, polystyrene, ethyl vinyl acetate, acrylonitrile butadiene styrene, or polyolefine, or a combination thereof.

In a particular embodiment in accordance with the present invention, a support may be provided, comprising means for varying the distance between the base part and the carrier part, such that the height of the support is adjustable depending on the application. Preferably, the means for varying the distance may comprise a screw jack system.

Additionally, the present invention provides a method for manufacturing a support as described above, comprising obtaining a composition of granulated rubber and a polymer and compression moulding the composition to form the resilient contact layer.

The base part and carrier part may be injection moulded or extruded, preferably after the already manufactured resilient layer is placed in the mould, such that during the injection moulding or extrusion process the plastic is at least partially stuck to the resilient contact layer and even, without being bound by any theory, intruded in the pores of the resilient contact layer.

A support as described in the above embodiments may be used in a particular as pedestal for supporting an elevated roof or garden terrace, a podium, an elevated technical floor, and the like.

## Claims

1. A support comprising a base part for being positioned on an underlying surface and a carrier part for carrying an elevated surface, **characterized in that** the base part comprises a resilient contact layer for making contact with the underlying surface.

2. A support according to claim 1, wherein the resilient contact layer has a thickness of at least 2 mm.

3. A support according to claim 2, wherein the resilient contact layer has a thickness from 2 to 25 mm.

4. A support according to any of the above claims wherein the resilient contact layer has sufficient resilience to compensate underlying surface roughness or irregularities.

5. A support according to any of the above claims, wherein the resilient contact layer comprises rubber.

6. A support according to claim 5, wherein the resilient contact layer is made of a compression moulded composition of granulated rubber and a polymer.

7. A support according to any of the above claims, wherein the base part and the carrier part is made of a plastic.

8. A support according to any of the above claims, comprising means for varying the distance between the base part and the carrier part.

9. A support according to claim 8, comprising a screw jack system.

10. Use of a support according to any of the above claims as a pedestal.

11. Method for manufacturing a support according to claim 6, comprising obtaining a composition of granulated rubber and a polymer and compression moulding the composition to form the resilient contact layer.

12. Method for manufacturing a support according to claim 11, comprising injection moulding or extruding a plastic obtaining the base part and the carrier part.
